# EUROPÄISCHE PATENTSCHRIFT

(11) **EP 1 832 325 B1**
(45) Veröffentlichungstag und Bekanntmachung des Hinweises auf die Patenterteilung: **23.06.2010**
(21) Anmeldenummer: 07003956.5
(22) Anmeldetag: 27.02.2007
(51) Int. Cl.: B01D 29/09, B01D 33/04, B01D 33/056

(54) **Bandfilter**
Belt filter
Filtre à bande

(30) Priorität: 09.03.2006 DE 202006003696 U
(43) Veröffentlichungstag der Anmeldung: 12.09.2007
(73) Patentinhaber: Dipl.-Ing. Erich Fetzer GmbH & Co., 72770 Reutlingen (DE)
(72) Erfinder: Wagner, Jürgen, 72770 Reutlingen (DE)
(74) Vertreter: Späth, Dieter

(56) Entgegenhaltungen:
- DE-A1- 4 220 400
- DE-U1- 20 305 703
- FR-A1- 2 806 926

## Beschreibung

Die Erfindung betrifft ein Bandfilter mit den Merkmalen des Oberbegriffs des Anspruchs 1.

Bandfilter sind an sich bekannt. Sie weisen ein Filterband beispielsweise aus einem Vlies auf, das auf einer Kreisbogenbahn um zwei von einander beabstandete, drehbare Scheiben oder Ringe geführt ist und dadurch eine Filtermulde bildet. An Stirnseiten wird die Filtermulde von den Scheiben oder von Wandungen, an deren einander zugewandten Innenseiten die kreisförmigen Ringe drehbar angebracht sind, begrenzt. Das Filterband kann von einer Rolle abgewickelt und nach Gebrauch in einen Auffangbehälter geleitet werden oder es kann endlos ausgeführt und um die Filtermulde herum, vorzugsweise unter der Filtermulde hindurch, geführt sein. In diesem Fall muss das Filterband gereinigt werden bevor es die Filtermulde wieder durchläuft. Üblicherweise ist ein Stützband vorgesehen, welches sich im Bereich der Filtermulde auf einer Außenseite des Filterbandes befindet und das Filterband in Anlage an einem Außenumfang der drehbaren Scheiben oder Ringe hält. Das Stützband ist vielfach als Gliederband ausgebildet und stützt das Filterband nach außen hin ab. Das Stützband ist üblicherweise endlos und wird um die Filtermulde herum, vorzugsweise unter ihrer Unterseite, zurückgeführt. Zu filternde Flüssigkeit wird in die Filtermulde eingeleitet und tritt durch das Filterband durch, wobei Schmutzpartikel sich auf dem Filterband absetzen. Die Schmutzpartikel bilden einen gewünschten Filterkuchen, der eine Filterwirkung des Filterbandes verbessert. Durch Fördern des Filterbandes wird das verschmutze Filterband mit dem aus den Schmutzpartikeln bestehenden Filterkuchen aus der Filtermulde entfernt und unbenutztes oder gereinigtes Filterband nachgeführt. Die Förderung des Filterbandes kann kontinuierlich oder schrittweise erfolgen. Die durch das Filterband durchgetretene, gereinigte Flüssigkeit (Filtrat) wird in einer Wanne oder dgl. aufgefangen, wobei auch ein Gehäuse des Bandfilters die Wanne bilden kann. Beispiele derartiger Bandfilter zeigen beispielsweise die EP 0 331 020 A2 oder die DE 84 08 211 U1.

Als nachteilig wird an den bekannten Bandfiltern die durch die drehbaren Scheiben oder Ringe, um die das Filterband geführt ist, zwingend notwendige Kreisbogenbahn des Filterbandes angesehen. Ist der Flüssigkeitsstand in der Filtermulde hoch, erzwingt die Kreisbogenbahn ein steil ansteigendes Filterband auf einer Ausleitseite. Es besteht die Gefahr, dass der Filterkuchen vom Filterband in die Filtermulde fällt und nicht mit dem Filterband ausgeleitet wird. Ist der Flüssigkeitsstand in der Filtermulde niedrig, erreicht man zwar eine flache Ausleitung des Filterbandes, dafür ist jedoch das Flüssigkeitsvolumen in der Filtermulde klein, insbesondere ergibt sich ein ungünstiges Verhältnis des Flüssigkeitsvolumens in der Filtermulde zur Gesamtgröße des Bandfilters. Auch ist in Folge des niedrigen Flüssigkeitsstands der Flüssigkeitsdruck und mit ihm ein Durchsatz durch das Filterband gering. Aus diesem Grund ist mit feststehenden Führungen für das Filterband an Innenseiten der Wandungen des Bandfilters anstelle drehbarer Scheiben oder Ringe experimentiert worden. Die feststehenden Führungen haben einen bogenförmigen, jedoch nicht kreisbogenförmigen Verlauf. Insbesondere wird ein Bogenradius an der Ausleitseite groß, um die Steigung des Filterbandes an der Ausleitseite so niedrig zu halten, dass der Filterkuchen nicht vom Filterband fällt. Beispiele für derartige Bandfilter mit feststehenden Führungen für das Filterband offenbaren die DE 203 05 703 U1 und DE 42 20 400 A1. Es treten jedoch Probleme wegen der Reibung des Filterbandes an den Bandführungen auf: Im Bereich des kleineren Radius der Bandführungen ist die Reibung zwischen Filterband und Bandführungen hoch. Es tritt das Problem auf, dass das Filterband und/oder ggf. auch ein Stützband für das Filterband durch den Zug in Längsrichtung schmäler wird und von den Bandführungen gezogen wird. Außerdem treten Probleme wegen der Abdichtung des Filterbandes an den Bandführungen auf: Im Bereich des größeren Radius der Bandführungen ist eine Andruckkraft des Filterbandes an den Bandführungen niedrig und eine Dichtwirkung gering. Es kann Schmutz ungefiltert zwischen dem Filterband und den Bandführungen durchtreten.

Die Patentanmeldung FR-A1-2 806 926 offenbart ein Bandfilter, dessen Filterband mit feststehenden, kreisbogenförmigen Bandführungen an Wandungen des Bandfilters geführt ist.

Aufgabe der Erfindung ist den Transport des Filterbandes eines Bandfilters mit feststehenden Bandführungen zu verbessern.

Zur Lösung dieser Probleme schlägt die Erfindung ein Bandfilter mit den Merkmalen des Anspruchs 1 vor. Das erfindungsgemäße Bandfilter weist feststehende und kreisbogenförmige Bandführungen für das Filterband auf. Das Filterband wird also doch wieder auf einer kreisbogenförmigen Bahn geführt, allerdings mit feststehenden Bandführungen, an denen das Filterband entlang gleitet. Vorteil ist eine zumindest näherungsweise konstante Reibung zwischen dem Filterband und den Bandführungen über die gesamte geführte Bandlänge des Filterbandes aufgrund des konstanten Radius der Bandführungen. Dadurch wird die kleinstmögliche, notwendige Zugkraft zum Fördern des Filterbandes erreicht. Das Problem wird beherrschbar, dass durch Längszug das Filterband seine Breite so verringert, dass es von den Bandführungen abrutscht, es lässt sich ein im Dauerbetrieb zuverlässig arbeitendes Bandfilter mit feststehenden Bandführungen verwirklichen. Ein weiterer Vorteil der Erfindung ist, dass die Andruckkraft des Filterbandes an die Bandführungen über die gesamte geführte Länge des Filterbandes konstant ist. Dadurch ist zuverlässig eine ausreichende Abdichtung zwischen dem Filterband und den Bandführungen möglich, die einen Durchtritt von Schmutzpartikeln zwischen dem Filterband und den Bandführungen hindurch vermeidet. Außerdem entfallen eine Drehlagerung von Scheiben oder Ringen zur Führung des Filterbandes.

Des weiteren weist das erfindungsgemäße Bandfilter ein Stützband auf, das mit dem Filterband verhakt, d. h. einen Formschluss eingeht. Ein solcher Formschluss wird erreicht von einem Stützband, das Ecken oder dgl. aufweist, die zum Filterband hin abstehen, überstehen oder erhaben sind und sich in das Filterband eindrücken, so dass das Stützband mit dem Filterband verhakt. Das angetriebene Stützband nimmt das Filterband durch den Formschluss mit, eine Relativbewegung zwischen dem Stützband und dem Filterband, also ein Schlupf, wird vermieden. Außerdem hält das Stützband das Filterband durch die Verhakung in seiner Breite aufgespannt. Dadurch wird vermieden, dass Zug in Längsrichtung das Filterband verschmälert und das Filterband deswegen oder aus anderem Grund von den Bandführungen abrutscht.

Eine Ausgestaltung der Erfindung sieht ein fluiddurchlässiges Stützband vor, welches sich im Bereich der Filtermulde auf einer Außenseite des Filterbandes befindet und dieses nach außen hin abstützt. Das Stützband kann beispielsweise als Gliederband ausgebildet sein.

Eine Weiterbildung der Erfindung sieht ein Wabenband als Stützband vor. Das Wabenband verhakt mit dem Filterband. Ein Wabenband hat den Vorteil eines großen Durchlass, der Durchtritt der zu filternden Flüssigkeit wird vom Wabenband praktisch nicht beeinflusst. Weiterer Vorteil ist eine punktförmige Anlage des Wabenbandes an den kreisbogenförmigen Bandführungen.

Die Erfindung wird nachfolgend anhand eines in der Zeichnung dargestellten Ausführungsbeispiels näher erläutert. Es Zeigen:
- Figur 1: einen Schnitt eines erfindungsgemäßen Bandfilters in einer Längsrichtung eines Filterbandes; und
- Figur 2: einen Ausriß eines Wabenbandes als Stützband des Bandfilters gemäß der Erfindung.

Das in der Zeichnung dargestellte, erfindungsgemäße Bandfilter 10 weist ein kastenförmiges Gehäuse 12 auf, dessen unterer Bereich eine Auffangwanne 14 für gefilterte Flüssigkeit (Filtrat) bildet. An Innenseiten von Seitenwänden 16 des Gehäuses 12 sind Kunststoffleisten angebracht, die Bandführungen 18 bilden. Die Bandführungen 18 sind kreisbogenförmig. Die Bandführungen 18 können beispielsweise auch als Sicken an die Seitenwände 16 des Gehäuses 12 angeformt oder beispielsweise auch als Nut ausgeführt sein (nicht dargestellt). Um eine Außenseite der Bandführungen 18 ist ein Filterband 20 herumgeführt. Das Filterband 20 liegt außen an den Bandführungen 18 an, im Bereich der Bandführungen 18 bildet das Filterband 20 eine Filtermulde 22, die an Stirnseiten von den Seitenwänden 16 des Gehäuses 12 des Bandfilters 10 begrenzt wird. Die Seitenwände 16 bilden Wandungen der Filtermulde 22.

Das Filterband 20 ist beispielsweise ein Vlies, das von einer Vorratsrolle 24 abgewickelt wird, die drehbar im Gehäuse 12 gelagert ist. Das von der Vorratsrolle 24 kommende Filterband 20 wird um die Bandführungen 18 herum zu einer Ausleitstelle geführt, an der das Filterband 20 um eine Umlenkrolle 26 herum ausgeleitet wird. Das Filterband 20 gelangt zusammen mit einem an ihm haftenden Filterkuchen in einen Sammelbehälter 28.

Im Bereich der Filtermulde 22 ist ein Stützband 30 auf der Außenseite des Filterbandes 20 ebenfalls um die Bandführungen 18 herumgeführt. Das Stützband 30 ist als Gliederband ausgebildet. Das Stützband 30 stützt das Filterband 20 nach außen hin ab und hält Randbereiche des Filterbandes 20 in Anlage an den Bandführungen 18. Das Stützband 30 ist ein Endlosband, das unter der Filtermulde 22 hindurch rückgeführt ist. Das Stützband 30 läuft um Umlenkrollen 26, 31 um, wobei um eine der Umlenkrollen 26 auch das Filterband 20 an der Ausleitstelle umgelenkt wird. Diese Umlenkrolle 26 ist mittels eines Elektromotors 32 mit angeflanschtem Untersetzungs- und Winkelgetriebe antreibbar. Über die Umlenkrolle 26 treibt der Elektromotor 32 das Stützband 30 und das Filterband 20 an.

Die Zuführung zu filternder Flüssigkeit in die Filtermulde 22 ist vergleichsweise frei von oben möglich, da beim erfindungsgemäßen Bandfilter 10 die Filtermulde 22 von oben nicht abgedeckt sein muss und das Bandfilter 10 oberhalb der Filtermulde 22 keine die Einleitung der zu filternden Flüssigkeit störende Bauteile aufweist. Im dargestellten und beschriebenen Ausführungsbeispiel der Erfindung erfolgt die Einleitung zu filternder Flüssigkeit in die Filtermulde 22 mit einem Einlaufkanal 34 durch eine der beiden Seitenwände 16, des Gehäuses 12 des Bandfilters 10, die die Filtermulde 22 an den Stirnseiten begrenzen.

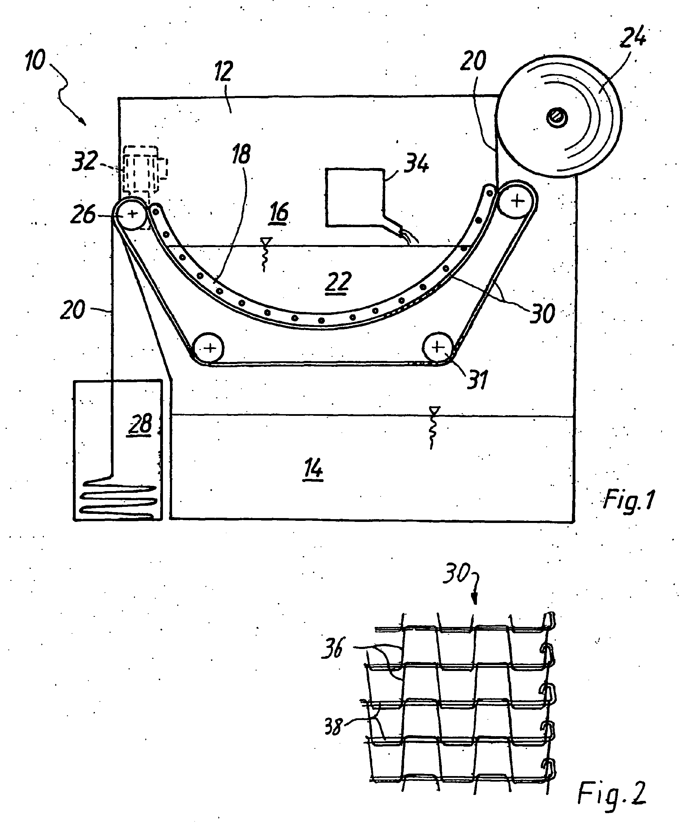

Das Stützband 30 ist ein Wabenband, wie es in Figur 2 gezeigt ist. Es weist quer im Zickzack zum Band verlaufende Streifen 36 auf, die beispielsweise aus Bandstahl gebogen sind. Genaugenommen sind die Streifen 36 trapezförmig. Die Streifen 36 greigen etwas ineinander und sind durch ebenfalls quer verlaufende Rundstäbe 38 gelenkig miteinander verbunden, so dass eine Art Kette entsteht. Die Streifen 36 liegen punktförmig an den kreisbogenförmigen Bandführungen 18 an. Aufgrund ihrer Abwinklungen bilden die Streifen 36 Ecken, die auf der dem Filterband 20 zugewandten Seite erhaben sind. Die Ecken an den Abwinklungen der Streifen 36 und auch die Kanten an geraden Abschnitten der Streifen 36 zwischen den Abwinklungen drücken sich in das Filterband 20 ein, so dass das Stützband 30 mit dem Filterband 20 verhakt, also einen Formschluss bildet. Durch das Verhaken mit dem Filterband 20 hält das das Stützband 30 bildende Wabenband das Filterband 20 in der Breite aufgespannt, so dass das Filterband 20 nicht von den Bandführungen 18 abrutscht. Und der Formschluss des Filterbandes 20 durch Verhaken mit dem Stützband 30 bewirkt einen guten und schlupffreien Antrieb des Filterbandes 20 durch das angetriebenen Stützband 30.

Die zu filternde Flüssigkeit tritt aus der Filtermulde 22 durch das Filterband 20 und das durchlässige Stützband 30 durch und tropft in die Auffangwanne 14 unterhalb der Filtermulde 22 ab. Beim Durchtritt durch das Filterband 20 setzen sich Schmutzpartikel aus der zu filternden Flüssigkeit auf einer Innenseite des Filterbandes 20 ab und bauen einen gewünschten Filterkuchen auf, der die Filterwirkung des Filterbandes 20 verbessert. Um die Schmutzpartikel aus der Filtermulde 22 zu fördern wird das Filterband 20 zusammen mit dem Stützband 30 mittels des Elektromotors 32 über die Umlenkrolle 26 angetrieben, d. h. in Richtung der Ausleitstelle gefördert. Das Filterband 20 transportiert den auf ihm abgesetzten Filterkuchen über die Umlenkrolle 26 auf der Ausleitseite und gelangt zusammen mit dem Filterkuchen in den Sammelbehälter 28. Der Antrieb des Filterbandes 20 kann kontinuierlich oder auch schrittweise bei Bedarf erfolgen. Das Filterband 20 kann in Abhängigkeit von einem Flüssigkeitspegel in der Filtermulde 22 angetrieben werden.

## Patentansprüche

1. Bandfilter mit einem Filterband (2), das zwischen zwei voneinander beanstandeten Wandungen (16) entlang einer Bahn geführt ist und dadurch mit den beiden Wandungen (16) eine Filtermulde (22) bildet, und mit feststehenden, kreisbogenförmigen Bandführungen (18) an den Wandungen (16), die das Filterband (20) führen, **dadurch gekennzeichnet, dass** Bandfilter (10) ein mit dem Filterband (20) verhakendes Stützband (30) aufweist.

2. Bandfilter nach Anspruch 1, **dadurch gekennzeichnet, dass** das Bandfilter (10) ein fluiddurchlässiges Stützband (30) aufweist, das im Bereich der Filtermulde (22) auf einer Außenseite des Filterbandes (20) angeordnet ist und an dessen Innenseite das Filterband (20) im Bereich der Filtermulde (22) anliegt.

3. Bandfilter nach Anspruch 1 oder 2, **dadurch gekennzeichnet, dass** das Stützband (30) ein Wabenband ist.

## Claims

1. Belt filter having a filter belt (20), which is guided along a path between two walls (16) that are spaced apart and thereby forms a filter trough (22) with the two walls (16), and having fixed, arcuate belt guides (18) at the walls (16) that guide the filter belt (20), **characterized in that** the belt filer (10) has a support belt (30) that engages with the filter belt (20).

2. Belt filter according to Claim 1, **characterized in that** the belt filter (10) has a fluid-permeable support belt (30), which is located in the region of the filter trough (22) on an outside of the filter belt (20) and the filter belt (20) abuts against its inside in the region of the filter trough (22).

3. Belt filter according to Claim 1 or 2, **characterized in that** the support belt (30) is a honeycomb belt.

## Revendications

1. Filtre à bande comprenant une bande filtrante (20) qui est guidée le long d'une piste, entre deux cloisonnements (16) distants l'un de l'autre, et forme ainsi une auge de filtration (22) avec les deux cloisonnements (16) ; et des guide-bande stationnaires (18) en arc de cercle, situés sur lesdits cloisonnements (16) et guidant ladite bande filtrante (20), **caractérisé par le fait que** ledit filtre (10) à bande comporte un ruban d'appui (30) verrouillé, par accrochage, à ladite bande filtrante (20).

2. Filtre à bande selon la revendication 1, **caractérisé par le fait que** ledit filtre (10) à bande présente un ruban d'appui (30) perméable aux fluides, qui est disposé sur une face extérieure de la bande filtrante (20) dans la région de l'auge de filtration (22), et contre la face intérieure duquel ladite bande filtrante (20) est en applique dans la région de ladite auge de filtration (22).

3. Filtre à bande selon la revendication 1 ou 2, **caractérisé par le fait que** le ruban d'appui (30) est un ruban alvéolé.
